# EUROPEAN PATENT APPLICATION

(11) **EP 1 123 723 A1**
(43) Date of publication of application: **16.08.2001**
(21) Application number: 00830094.9
(22) Date of filing: 10.02.2000
(51) Int. Cl.: B01D 21/02, B01D 21/24, C02F 1/00

(54) **Plant for separating solid particles from a liquid phase**

(71) Applicant: Garcia, Fernando H., 7600 Mar Del Plata (AR); Pieroni, Armando, 7600 Mar del Plata (AR); Bartolomei, Carlo Alfredo, 55036 Pieve a Fosciana (LU) (IT)
(72) Inventor: Garcia, Fernando H., 7600 Mar Del Plata (AR); Pieroni, Armando, 7600 Mar del Plata (AR); Bartolomei, Carlo Alfredo, 55036 Pieve a Fosciana (LU) (IT)
(74) Representative: Celestino, Marco

(57) **Abstract**

The plant comprises a precipitator (3), a main tank (40) wherein the precipitator is inserted and that extends vertically with a height at least four times the diameter; a horizontal duct (40a) at the bottom of the main tank (40) for gathering the precipitate, and an outlet duct (40b) of partly purified liquid at the top of said main tank (40). The main tank (40) can have upside down frustum conical shape. The plant allows to obtain the maximum reaction efficiency in the precipitation step and in the decantation step of the precipitate. Systems are provided for washing the precipitate wherein the separation between the liquid phase the solid phase is carried out in a way similar to the main tank of the precipitator. Downstream of the main tank (40) purification tanks (41,42) are provided having at the bottom turbidity sensors (43) that open gates (44) for discharging in the horizontal duct (40a) of the main tank (40) any residual precipitate.

## Description

### Field of the invention

The present invention relates to a method for filtering and separating solid particles from a liquid phase.

Furthermore the invention relates to a plant that carries out this method.

The invention relates also to a precipitator for the production of the solid particles to separate and to a reservoir for storing the liquid products used therein.

### Description of the prior art

Are known plants for separating by decantation or by centrifugation of solid particles deriving from reactions of precipitation.

These plants require complex systems of control, gathering, washing, separating the phases liquid and solid.

### Summary of the invention

It is an object of the present invention to provide a method and a plant for filtering and separating solid particles from a liquid phase that is more lighter and simpler than existing systems.

It is another object of the present invention to provide a precipitator suitable for being inserted in this plant.

It is a further object the present invention to provide a reservoir for storing the liquid products used in this plant that is the least bulky possible above the the ground level.

These objects are achieved by the method and the plant according to the invention for precipitating and separating precipitated solid material in suspension in a liquid phase.

The plant in a general embodiment comprises
- a precipitater;
- a main tank wherein said precipitator is arranged and that extends vertically with a height at least four times the diameter;
- a horizontal duct at the bottom of said main tank for gathering the precipitate;
- an outlet duct is provided of partly purified liquid at the top of said main tank.

The precipitator is connected with the at least two adduction channels of the reagents of the reaction of precipitation.

Downstream of the main tank purification tanks are provided having at the bottom turbidity sensors that open gates for discharging into said horizontal duct of the main tank the any residual precipitate. downstream of the horizontal duct of the main tank washing plant of the precipitate follows.

The main tank has preferably upside down frustum conical shape. Also the precipitator can have this upside down frustum conical shape and in it at least two ducts converge tangentially with the reagents solutions in order to orient the liquid jet tangentially on a impeller that rotates in a support integral to the precipitator that causes a centrifugal liquid flow .

The washing plant downstream of the horizontal duct of the main tank comprises a inlet duct of rinsing water and a double diaphragm pump. The washing duct converges into a main washing tank that extends vertically with a height at least four times the diameter.

A horizontal duct is provided at the bottom of the main washing tank for gathering the washed precipitate and an outlet duct is provided of partly purified liquid at the top of the main washing tank in which x ducts of rinsing water converge.

Further decantation tanks are provided downstream of the main washing tank . It comprise turbidity sensors for sensing the level of precipitate that deposits at the bottom of said decantation tanks. The sensors drive the opening of gates for the inlet, of the washed precipitate and decanted into the horizontal duct of the main washing tank .

The washed precipitate can be dried on a perforated drying roller for being scraped off and accumulated for be stored and transported for sale or direct use.

A plant is provided for treatment of the vapour derived from the drying step comprising a cap, a fan duct that sucks the vapour from the cap and a refrigerator for cooling and condensing the vapour .

Preferably, a washing chamber is provided for the vapour comprising a pouring down distributor of substances suitable for reacting with the impurities present in the vapour.

The reagents that reach the precipitator can advantageously be stored in reservoirs of elongated shape with a length equal to at least ten times their diameter suitable for being arranged in channels under the road level of the plant. The channels are excavated in the ground and closed by grids . In the channels foundations are arranged for fastening the reservoirs and suitably distanced.

The washing plant may comprise an elongated tank having a inner permeable wall on which a filtering cloth rests. In the tank a driven screw is provided that ends in a duct of evacuation of the precipitate. Means are provided for reversing the rotation of the screw so that this operates either as a stirring means for the precipitate to wash or as a system for evacuation of the washed precipitate .

### Brief description of the drawings

Further characteristics and/or advantages of the method and of the plant according to the present invention will be made clearer with the following description of an embodiment thereof, exemplifying but not limitative, with reference to the attached drawings wherein:
- figure 1 shows a diagrammatical elevational view of a plant for filtering and separating solid particles from a liquid phase that uses the method according to the invention;
- figure 2 shows a diagrammatical elevational view of a preferred embodiment of a precipitator that can be used in the plant of figure 1,
- figure 3 shows a top plan view partial of the precipitator of figure 2;
- figure 4 shows a complete plant according to the present invention for precipitating, separating solid particles, washing the precipitate and drying the precipitate.
- Figure 5 shows a preferred embodiment of the system for recovering the vapour deriving from the drying step of the precipitate and for its washing;
- figure 6 shows a sectional diagrammatical view of a preferred embodiment of the system for storing the reagents used for precipitation;
- figure 7 shows a sectional longitudinal view of one of the reservoirs of the system for storing of figure 6;
- figure 8 shows a sectional view longitudinal of a different embodiment of a washing system for the precipitate;
- figure 9 shows a cross sectional view of the washing system for figure 8.

### Description of the preferred embodiments

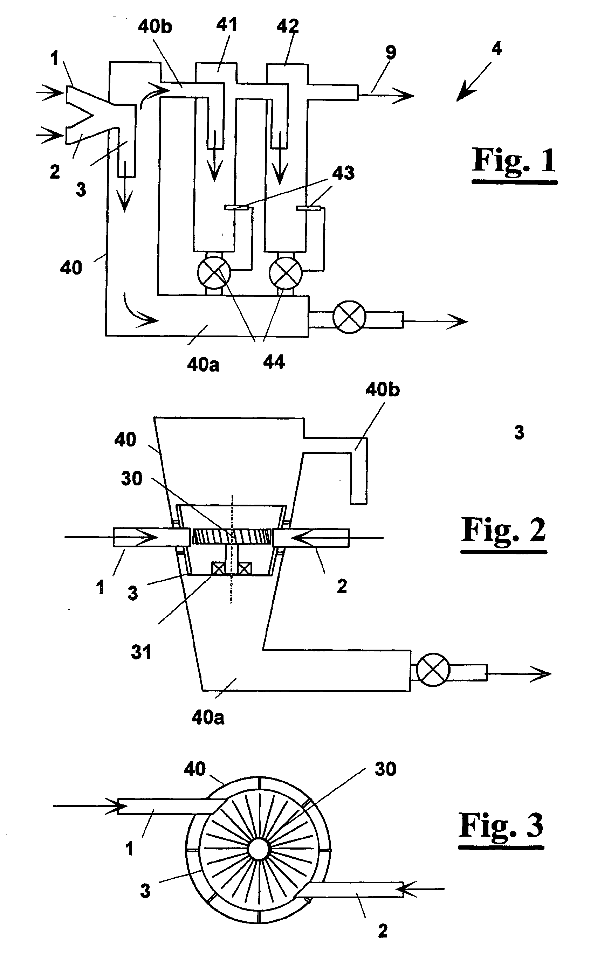

With reference to figure 1, a plant for precipitation and decantation comprises two adduction channels 1 and 2 for corresponding reagents suitable for combining in the reactor 3 of a precipitator 4. The channels 1 and 2 come for example from reservoirs of previously accumulated liquid.

The precipitator 4 comprises a tank 40 that extends vertically with a height at least four times the diameter. Tank 40 has at the bottom a horizontal duct 40a for gathering the precipitate whereas at the top has an outlet duct 40b of partly purified liquid.

The reactor 3 is arranged in the top of the tank 40, which has for example height ten metres with a diameter of two metres.

The liquid phase, resulting from the reaction of precipitation reaches, through duct 40a, a purification tank 41 and then a purification tank 42 leaving that at the bottom further precipitated is deposited. Turbidity sensors 43 open gates 44 for discharging into the horizontal duct 40a of tank 40 the further precipitate stored eventually in the purification tanks 41 and 42. Depending on the type of reaction of precipitation, of the liquid coming from the duct 40a and to the height of the tank 40, second purification tank 42 can be omitted.

With reference figure 2, the main tank 40 has preferably upside down frustum conical shape, for example with an angle of 5-10°.

In a preferred embodiment also the precipitator 3 can have upside down frustum conical shape. In it the two ducts 1 and 2 with the reagents solutions can converge tangentially in order to orient the liquid jet tangentially on an impeller 30 that rotates in a support 31 integral to the precipitator 3. The liquid jets 1 and 2 create a centrifugal liquid flow , so that a rotational movement of the liquid is created in the precipitator 30, outside the precipitator and partly also in the rest of the tank 40. This rotation allows a laminar flow in the liquid, increasing the reaction and decantation speed.

Downstream of the horizontal duct 40a of the main tank 40 is provided a duct is provided 46 that brings the precipitate to a washing plant.

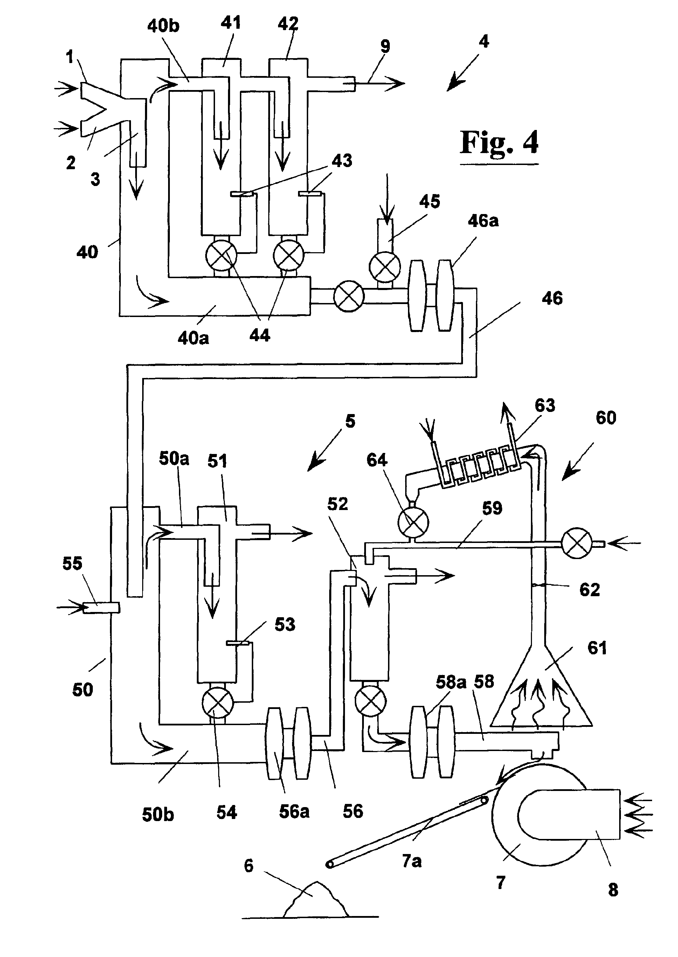

With reference to figure 4, in a first embodiment of the invention the duct 46 that brings to the washing plant is connected with a inlet duct 45 of rinsing water and with a double diaphragm pump 46a for pushing forward the mixture solid/liquid mixture. The washing duct 46 converges into a main washing tank 50 similar to tank 40 wherein the precipitate is poured. Also tank 50, then, extends vertically with a height at least four times the diameter.

In main washing tank 50 water jets 55 flow, for example of river water. The washed and decanted precipitate flows into the horizontal duct 50b, whereas the water and possible residual solutes skim from the outlet located at the top 50a for reaching a further purification tank 51.

The precipitated that deposits at the bottom of the purification tank 51, once reached a level signalled by the turbidity sensor 53 is redelivered into the horizontal duct 50b through gate 54. All the precipitated material, moreover, through a duct 56, pushed by a double diaphragm pump 56a, reaches a further distilled water rinsing tank 52 poured in through a duct 59. The rinsing water skims at the top from the tank 52, whereas the washed precipitate, by means of a double diaphragm pump 58a, is deposited through a duct into outlet 58 along a perforated drying roller 7 and then scraped off and accumulated in 6 for being stored and transported for sale or direct use.

The hot drying air 8 that crosses roller 7 comes for example from systems of ricirculation of hot smoke and gas produce by other plants.

Always with reference to figure 4, the vapour deriving from the drying step of the precipitate can be distilled in the plant 60 after having been stored by a cap 61 and led by means of a fan 62 through a refrigerator 63, for example having cooling coils or nests of tubes crossed by cold water or other refrigerant. The distilled water condensed is discharged through a gate 64 into the inlet duct 59 of the distilled water tank 52.

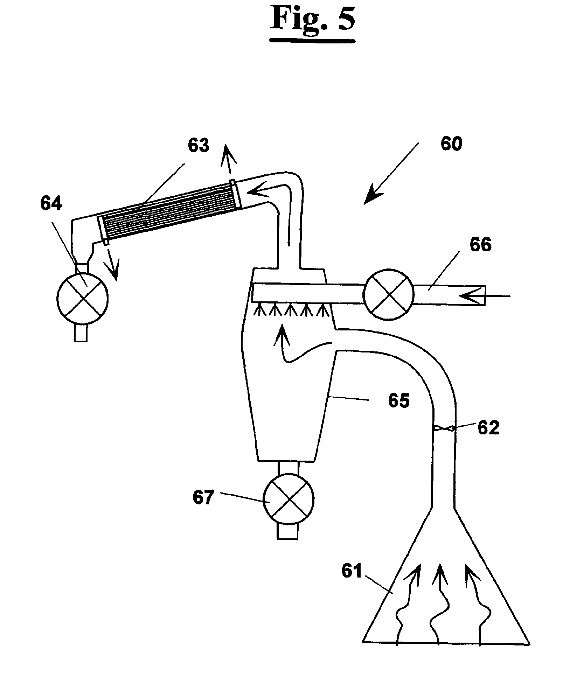

With reference to figure 5, the plant for recovering the vapour 60 can provide, alternatively to that of figure 4, a chamber 65 for washing the vapour by means of pouring substances 66 suitable for reacting with the impurities present in the vapour, before that this reaches condenser 63. For example, in case of vapour containing acid residues, it is possible that the substance 66 is calcium hydroxide, obtaining calcium chloride, which is then discharged through the gate 67.

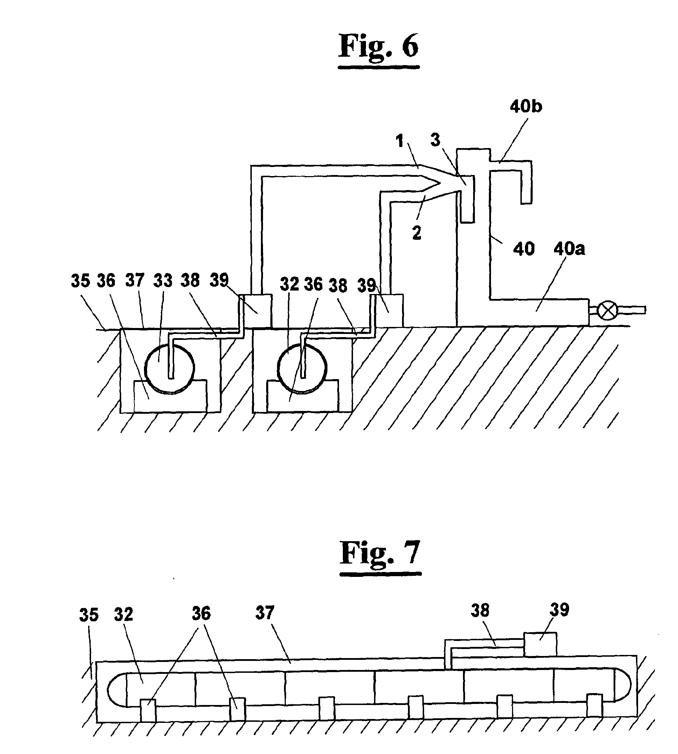

With reference figures 6 and 7, the reagents 1 and 2 that reach the precipitator 3 can advantageously be stored in reservoirs of elongated shape 32 and 33 suitable for being arranged in channels 37 under the road level of the plant. The channels 37 are excavated in the ground and closed by grids 37a. In the channels are arranged foundations 36 for fixing the reservoirs 32 and 33 suitably distanced.

Reservoirs 32 and 33 extend horizontally also up to several ten metres, and in any case for a length of at least 10 times the diameter. Therefore, the liquid in it present can be aspirated in a desired point and in particular near the use. For example, sucking ducts 38 of pumps 39 that deliver the liquid into ducts 1 and 2 can be arranged near the precipitator 3.

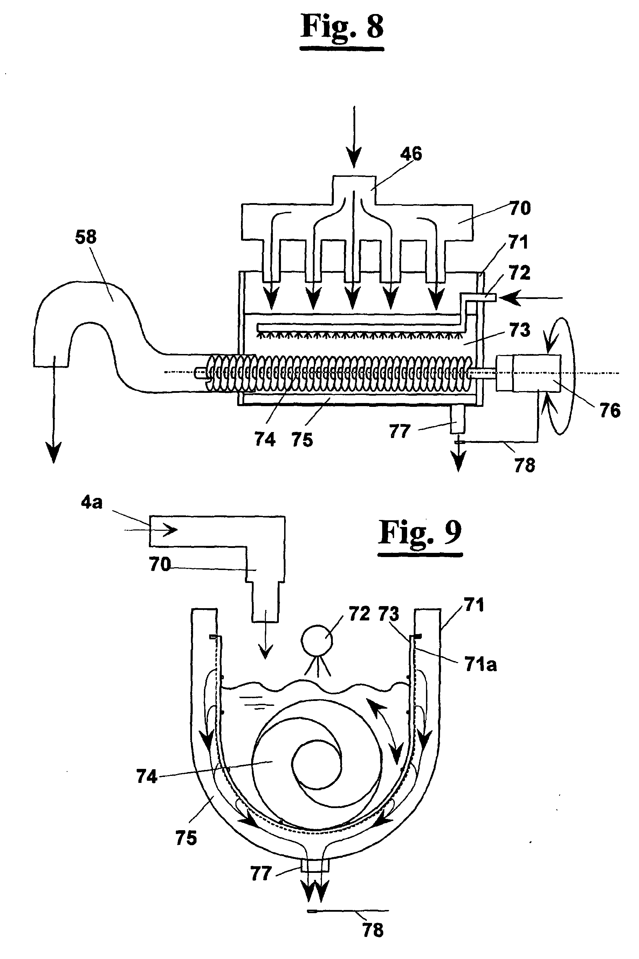

According to a different embodiment possible in case of precipitated with large, acicular or thread-like crystals, the washing plant of figure 4 arranged between ducts 46 and 58 can be substituted with that of figures 8 and 9, which comprises a washing tank 71. In tank 71 through a distributor 70 is poured in the precipitate in suspension with rinsing water. Further rinsing water is poured through a longitudinal duct 72. The tank 71 U-shaped and has a inner wall 71a to grid-like or perforated on which a cloth rests 73 fixed at the top and that can be reinforced with the metal wire. Axially in tank 71 a screw carrier 74 is provided that ends on one side in the duct 58 and is operated at the other end by a motor 76. Under grid 71a a gathering region of the washing liquid is provided, with a relative outlet mouth 77. A sensor 78 detects the presence of unwanted substances in the rinsing water, for example measuring the pH.

The motor 76, for pushing away the washed precipitate causes the screw 74 to rotate for example in clockwise direction bringing it in duct 58. When the sensor 78 detects acid rinsing water or other residues that could be in the precipitate, it causes the inversion of the rotation of the screw 74. This way the precipitate remains in the tank 71 and the screw 74 is a stirring means that mixes the precipitate and the rinsing water that comes from the duct 72. The rotation in clockwise direction and then the expulsion of the washed precipitate through the duct 58 starts as soon as the rinsing water is clean, as detected by the sensor 78

The embodiment of figures 7 and 8 for the washing system of figure 4 is suitable for precipitate not too thin that otherwise would block the cloth-like filter 73.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A plant for precipitating and separating solid material in suspension in a liquid phase comprising:
- a precipitator (3);
- a main tank (40) wherein said precipitator is arranged that extends vertically with a height at least four times the diameter;
- a horizontal duct (40a) at the bottom of said main tank (40) for gathering the precipitate;
- an outlet duct (40b) of partly purified liquid at the top of said main tank (40).

2. Plant according to claim 1 wherein said tank (40) main tank has upside down frustum conical shape.

3. Plant according to claim 1 wherein said precipitator (3) has upside down frustum conical shape and into it at least two ducts converge tangentially (1,2) with the reagents solutions for said reaction of precipitation that orient tangentially the liquid jet on a impeller (30) that rotates in a support (31) integral to the precipitator (3), said impeller (30) causing a centrifugal rotation to the liquid.

4. Plant according to claim 1 wherein downstream of said horizontal duct (40a) of said main tank (40) a washing plant (5) is provided' comprising a main washing tank (50) having at the bottom a horizontal duct (50a) for gathering the washed precipitate and at the top of said main washing tank an outlet duct (50b) of partly purified liquid, said main washing tank (50) having height higher than at least four times the diameter.

5. Plant according to claim 1 wherein downstream said main tank (40, 50) purification tanks are provided having at the bottom turbidity sensors (43,53) that open gates (44, 54) for discharging into said horizontal duct (40a, 50a) of the main tank (40, 50) any residual precipitate.

6. Plant according to claim 1 wherein downstream of said horizontal duct of said main tank a washing plant is provided comprising a elongated tank (71) having a inner permeable wall (71a) on which a filtering cloth rests (73) , longitudinally to said tank (71) being provided a driven screw carrier (74) that ends in a duct of evacuation (58) of the precipitate, means being provided (76,78) for reversing the rotation of said screw (74) so that this operates either as a stirring means for the precipitate to wash or as a system for evacuation of the washed precipitate .

7. Plant according to claim 1 wherein said washed precipitate reaches a drying apparatus comprising a perforated drying roller (7) and scraping means (7a) on said roller.

8. Plant according to claim 7 wherein an apparatus (60) is provided of treatment of the vapour derived from the drying step, comprising a cap (61), a fan duct (62) that sucks the vapour stored in said cap (61) and a refrigerator (63) for condensation of the vapour .

9. Plant according to claim 8 wherein a washing chamber (65) is provided of said vapour comprising a pouring down distributor (66) of substances suitable for reacting with the impurities present in the vapour .

10. Plant according to claim 1 wherein the reagents that come to said precipitator are stored in horizontal reservoirs (32,33) of elongated shape suitable for being arranged in channels (37) under the road level of the plant, said reservoirs (32,33) having length at least ten times the diameter.
